# EUROPÄISCHE PATENTANMELDUNG

(11) **EP 3 951 313 A1**
(43) Veröffentlichungstag der Anmeldung: **09.02.2022**
(21) Anmeldenummer: 21187132.2
(22) Anmeldetag: 22.07.2021
(51) Int. Cl.: G01B 11/245, G01B 11/25

(54) **GERADHEITSMESSUNG LÄNGLICHER WERKSTÜCKE IN DER METALLVERARBEITENDEN INDUSTRIE**

(30) Priorität: 05.08.2020 DE 102020209905
(71) Anmelder: SMS Group GmbH, 40237 Düsseldorf (DE)
(72) Erfinder: Sauerland, Martin, 41372 Niederkrüchten (DE); d'Hone, Frank, 51145 Köln (DE); Dähndel, Helge, 41061 Mönchengladbach (DE)
(74) Vertreter: Hemmerich & Kollegen

(57) **Zusammenfassung**

Vorrichtung (1) und Verfahren zur Messung der Geradheit eines länglichen Werkstücks (2), vorzugsweise in einer Anlage der metallverarbeitenden Industrie, wobei die Vorrichtung (1) aufweist: eine Messstrecke (M), in die das Werkstück (2) einbringbar ist und sich in einer Längsrichtung erstreckt; mehrere Messeinrichtungen (10), vorzugsweise in der Längsrichtung entlang der Messstrecke (M) angeordnet, die jeweils eingerichtet sind, um eine Entfernung zu zumindest einem Punkt der Oberfläche des in die Messtrecke (M) eingebrachten Werkstücks (2) zu detektieren, wodurch jeder Messeinrichtung (10) zumindest ein Messpunkt zugeordnet ist; dadurch gekennzeichnet, dass einer oder mehrere der Messpunkte, vorzugsweise die Positionen derselben und/oder die Messpunktdichte, entlang der Längsrichtung veränderbar sind.

## Beschreibung

### Technisches Gebiet

Die Erfindung betrifft eine Vorrichtung und ein Verfahren zur Messung der Geradheit eines länglichen Werkstücks, vorzugsweise in einer Anlage der metallverarbeitenden Industrie.

### Hintergrund der Erfindung

Zur Herstellung nahtloser Rohre sind verschiedene Verfahren wie beispielsweise das Schrägwalz-Pilgerschritt-Verfahren bekannt, bei denen ein vorgewärmter Vollblock aus einem Metall über eine Dornstange gezogen und anschließend in einem Schrägwalzwerk zum fertigen Rohr gewalzt und gestreckt wird.

Die Dornstange ist ein Beispiel eines Innenwerkzeugs, das auch andere und kombinierte Aufgaben in Zusammenwirkung mit anderen Werkzeugen übernehmen kann, beispielsweise zum Lochen von Blöcken zu Hohlblöcken oder Strecken von Hohlblöcken zu Luppen. Insbesondere Streckwalzwerke und Nahtlosrohrwerke, in denen massive Blöcke zu Hohlblöcken gelocht werden, umfassen solche Innenwerkzeuge und wirken in der Regel mit entsprechenden Außenwerkzeugen wie etwa Walzen gemeinsam auf ein Werkstück, um dieses zu einem Hohlblock, zu einer Luppe oder zu einem fertigen Rohr umzuformen.

Hierbei werden die Dornstangen üblicherweise mehrfach, d.h. jeweils an einer Vielzahl von Werkstücken angewendet, wobei sie zu diesem Zweck in einem Umlauf geführt werden können, vgl. beispielsweise WO 2017/005666 A1.

Diese Form der Wiederverwendung des Innenwerkzeugs führt nach einer gewissen Zeit zu Abnutzungserscheinungen, Beschädigungen und dergleichen. So können im Verlaufe der Anwendung des Innenwerkzeugs Fehlstellen, Oberflächendefekte aber auch Verformungen entstehen, die sich dann auch auf das herzustellende Bauteil übertragen. Aus diesem Grund sind Vorrichtungen und Verfahren zur Qualitätskontrolle des Innenwerkzeugs bekannt, vgl. beispielsweise DE 10 2014 008 835 A1.

Besondere Probleme treten bei der Anwendung ungerader Dornstangen auf, insbesondere in Verbindung mit dem Walzen in Schrägwalzwerken. Es ist daher wünschenswert, die Geradheit der Dornstangen und/oder der damit hergestellten Produkte zu prüfen.

Zur Ermittlung der Oberflächenqualität und Profilgeometrie länglicher Werkstücke sind berührende und berührungslose Techniken bekannt, wie beispielsweise laserbasierte Triangulations-Verfahren, vgl. DE 10 2010 011 217 A1, DE 10 2010 037 621 A1, DE 10 2011 119 658 A1 und EP 2 604 352 B1.

Die herkömmlichen Verfahren sind jedoch aus verschiedenen Gründen zur Ermittlung der Geradheit von Werkstücken nicht oder nur bedingt geeignet. So wird entweder das Werkstück oder die Messvorrichtung während der Vermessung bewegt, was zu Ungenauigkeiten führen kann oder zumindest eine aufwändige Fertigung und Ausmessung der Fahrbahn zum Transport des Werkstücks erfordert. Zudem sind Laser-Triangulatoren zur hochgenauen Profilmessung technisch aufwändig und teuer. Die Flexibilität und Skalierbarkeit der Messvorrichtungen ist eingeschränkt.

### Darstellung der Erfindung

Eine Aufgabe der Erfindung besteht darin, die Geradheitsmessung eines Werkstücks, vorzugsweise in einer Anlage der metallverarbeitenden Industrie, zu verbessern.

Gelöst wird die Aufgabe durch eine Vorrichtung mit den Merkmalen des Anspruchs 1 sowie ein Verfahren mit den Merkmalen des Anspruchs 10. Vorteilhafte Weiterbildungen folgen aus den Unteransprüchen, der folgenden Darstellung der Erfindung sowie der Beschreibung bevorzugter Ausführungsbeispiele.

Die Vorrichtung gemäß der Erfindung dient zur Messung der Geradheit eines länglichen Werkstücks. Besonders bevorzugt kommt die Vorrichtung in einer Anlage der metallverarbeitenden Industrie zur Anwendung, insbesondere zur Herstellung nahtloser Rohre wie beispielsweise in einem Schrägwalzwerk, Presslochwalzwerk, Pilgerwalzwerk, Stopfenwalzwerk, Kontiwalzwerk, Asselwalzwerk, Maßwalzwerk, Reduzierwalzwerke bzw. Streckreduzierwalzwerk. Das zu vermessende Werkstück ist aus diesem Grund vorzugsweise ein längliches Innenwerkzeug, wie etwa eine Dornstange, oder ein nahtloses Rohr. Allerdings kann die Vorrichtung auch zur Geradheitsmessung anderer länglicher Werkstücke genutzt werden, beispielsweise zur Vermessung von Stäben, Profilen, schweren und leichten Trägern, Schienen, tiefgezogenen Bauteilen wie etwa Blechprofilen, Schweißkonstruktionen und Baugruppen etwa in der Automobilfertigung, für den Kranbau, bei der Fertigung von Strommasten und bei anderen vorgefertigten Komponenten mit definiertem Querschnitt über die Länge.

Die Vorrichtung umfasst eine Messstrecke, in die das Werkstück einbringbar ist und sich darin in einer Längsrichtung erstreckt, und mehrere Messeinrichtungen an der Messstrecke. Die Messeinrichtungen sind vorzugsweise in der Längsrichtung entlang der Messstrecke angeordnet, und sie sind jeweils eingerichtet, um eine Entfernung bzw. einen Abstand zu zumindest einem Punkt der Oberfläche des in die Messtrecke eingebrachten Werkstücks zu detektieren, wodurch jeder Messeinrichtung zumindest ein Messpunkt zugeordnet ist. Aus den detektierten Abständen lässt sich ein Maß für die Geradheit ermitteln, beispielsweise mittels einer elektronischen Steuerung.

Erfindungsgemäß sind ein oder mehrere der Messpunkte, insbesondere die Positionen derselben und/oder die Messpunktdichte, entlang der genannten Längsrichtung, d.h. entlang der Messstrecke bzw. in Längserstreckungsrichtung des zu vermessenden Werkstücks, veränderbar. In anderen Worten, die Positionen der Messeinrichtungen und/oder deren Ausrichtungen und/oder Anzahl usw. ist so veränderbar, dass die Messpunkte entlang der Messstrecke verschoben, hinzugefügt oder entfernt werden können.

Die Verstellbarkeit der Messpunkt ermöglicht eine Skalierung der Vorrichtung in Bezug auf das zu vermessende Werkstück. Die Messgenauigkeit kann den jeweiligen Erfordernissen angepasst werden. Die Messpunktdichte ist variabel und kann so beispielsweise in Regionen hoher Beanspruchung oder Defektwahrscheinlichkeit konzentriert werden. Wenn die Anordnung der Messeinrichtungen die Messstrecke, in der das Werkstück vermessen wird, definiert, ist die Messtrecke durch die Variabilität der Messpunkte veränderbar. So kann die Vorrichtung beispielsweise zur Vermessung langer und kurzer Werkstücke verwendet werden, wobei bei gleichbleibender Anzahl an Messeinrichtungen die Messpunktdichte im Fall kurzer Werkstücke vergrößert werden kann, wodurch sich die Messgenauigkeit erhöht.

Vorzugsweise ist die Messpunktdichte entlang der Längsrichtung dadurch veränderbar, dass eine oder mehrere der Messeinrichtungen in der Längsrichtung verstellbar, d.h. verschiebbar, und/oder eine oder mehrere der Messeinrichtungen der Messstrecke hinzufügbar und/oder eine oder mehrere der Messeinrichtungen aus der Messstrecke entfernbar sind. Somit kann mit einer modularen Bauweise die Variabilität und Skalierbarkeit der Messstrecke realisiert werden.

Es sei darauf hingewiesen, dass die Formulierung "eine oder mehrere der Messeinrichtungen" auch alle Messeinrichtungen umfasst.

Die Positionen und gegebenenfalls Ausrichtungen der Messeinrichtungen können prinzipiell manuell bestimmt werden, beispielsweise indem die Montagestruktur der Messeinrichtungen eine entsprechende Skala aufweist, über welche die Positionen und/oder Ausrichtungen ablesbar sind.

Vorzugsweise weist die Vorrichtung jedoch zumindest einen Messeinrichtungsdetektor auf, der eingerichtet ist, um die Entfernung zu einer oder mehreren der Messeinrichtungen zu detektieren. Zu diesem Zweck können die entsprechenden Messeinrichtungen ein Positionselement, beispielsweise eine herausklappbare Positionsflagge, aufweisen, das als Referenzpunkt zur Positions- bzw. Entfernungsmessung dient. Der Messeinrichtungsdetektor ist vorzugsweise ein Laser-Entfernungsmesser oder umfasst einen solchen. Der Messeinrichtungsdetektor kann zum Einmessen bzw. zur Kalibrierung der Messeinrichtungen genutzt werden.

Vorzugsweise umfassen eine oder mehrere der Messeinrichtungen einen Lichtschnittsensor, wodurch pro entsprechendem Messpunkt ein Höhenprofil des Werkstücks entlang eines Querschnitts detektierbar ist. In anderen Worten, die "Messpunkte" sind im Fall der Anwendung von Lichtschnittsensoren linienförmige Höhenprofile. Die Messung nutzt in diesem Fall vorzugsweise eine Laserlinie, die von einem Laser der Messeinrichtung auf die Oberfläche des Werkstücks projiziert wird. Ein lichtempfindlicher Detektor, beispielsweise eine Digitalkamera, detektiert die Laserlinie. Durch Triangulation lässt sich aus dem detektierten Abbild der Laserlinie der Abstand der Linie von der Messeinrichtung bzw. das Profil entlang der Laserlinie ermitteln. Eine oder mehrere der mit einem Lichtschnittsensor ausgestatteten Messeinrichtungen sind vorzugsweise so ausgerichtet, dass der zu vermessende Querschnitt senkrecht auf der Längsrichtung des Werkstücks steht. In anderen Worten, die entsprechenden Laserlinien verlaufen quer zur Erstreckungsrichtung des Werkstücks oder weisen zumindest eine nicht-verschwindende Vektorkomponente in dieser Richtung auf. Durch die Anwendung mehrerer Lichtschnittsensoren in Längsrichtung des Werkstücks ist die Geradheit des Werkstücks auf maschinenbaulich einfache und zuverlässige Weise ermittelbar.

Vorzugsweise weisen zumindest zwei Messeinrichtungen, die in der Längsrichtung voneinander beabstandet sind, insbesondere die beiden endseitigen Messeinrichtungen, je einen Lichtschnittsensor auf, wobei die beiden Messeinrichtungen in diesem Fall so ausgerichtet sind, dass sich der zu vermessende Querschnitt in der Längsrichtung des Werkstücks erstreckt oder eine nicht-verschwindende Vektorkomponente in dieser Richtung aufweist. Auf diese Weise sind die Enden des Werkstücks in Erstreckungsrichtung detektierbar, ohne dass das Werkstück präzise in der Messstrecke positioniert werden muss oder die Messstrecke während des Messvorgangs durchfährt. Die horizontale Position des Werkstücks ist somit innerhalb eines definierten Bereichs variabel und kann durch die beiden endseitigen Messeinrichtungen einfach und zuverlässig detektiert werden. Zudem ist auf diese Weise ohne weiteren maschinenbaulichen Aufwand eine Längenmessung des Werkstücks möglich.

Vorzugsweise sind ein oder mehrere Messpunkte jeweils durch mehrere Messeinrichtungen vermessbar. Die entsprechenden Messeinrichtungen können in diesem Fall an der gleichen Position in Längsrichtung des Werkstücks und in der Schnittebene dieser Position um das Werkstück herum angeordnet sein. In anderen Worten, es können mehrere, beispielsweise zwei, Messeinrichtungen an einer Messstation, d.h. an einer entsprechenden Schnittebene des Werkstücks senkrecht zur Längserstreckung, vorgesehen sein. Auf diese Weise lässt sich der Messbereich erweitern. Zudem müssen sich die Messeinrichtungen nicht exakt oberhalb des Werkstücks befinden, sondern können außerhalb der Senkrechten angeordnet sein.

Je nach Komplexität des Querschnitts des zu vermessenden Werkstücks kann die Anzahl der Messeinrichtungen je Messstation vielseitig variiert werden. So können für Werkstücke mit rundem Querschnitt ein oder zwei Messeinrichtungen ausreichend sein, während für Werkstücke mit komplexerem oder größerem Querschnitt die Anzahl der Messeinrichtungen pro Messstation größer ausfallen kann, beispielsweise vier bis acht.

Im Fall mehrerer Messeinrichtungen je Messstation können diese insbesondere bei runden oder geometrisch wenig komplexen Werkstücken vorteilhaft genutzt werden, um mehrere Werkstücke parallel bzw. gleichzeitig zu vermessen, wodurch der Durchsatz mit unveränderter Anzahl an Messeinrichtungen erhöht wird.

Es sei darauf hingewiesen, dass räumliche Angaben wie beispielsweise "oberhalb", "unterhalb", "horizontal", "senkrecht" und dergleichen durch die bestimmungsgemäße Anwendung der Vorrichtung eindeutig bestimmt sind.

Vorzugsweise weist die Vorrichtung ferner eine Steuerung auf, die mit den Messeinrichtungen sowie dem etwaigen Messeinrichtungsdetektor drahtlos oder drahtgebunden in Kommunikation steht und eingerichtet ist, um Messdaten derselben zu empfangen und vorzugsweise Signale zur Ansteuerung, beispielsweise zur Positionsänderung, Steuerung des Messvorgangs usw., zu senden, wobei die Steuerung ferner eingerichtet ist, um aus den empfangenen Messdaten ein Maß für die Geradheit des Werkstücks zu ermitteln.

Auf diese Weise lässt sich der Messvorgang, inklusive einer etwaigen Einmessung und/oder Kalibrierung, teilweise oder vollständig automatisieren. Die Steuerung kommuniziert drahtlos oder drahtgebunden mit den entsprechenden Komponenten und kann eine programmierbare, rechnergestützte Einrichtung umfassen. Die Steuerung kann als zentrale oder dezentrale Recheneinheit implementiert sein, sie kann autark arbeiten oder Teil einer Prozesssteuerung sein, auf cloudbasierte und/oder internetbasierte Anwendungen zurückgreifen usw.. Die Ermittlung der Geradheit des Werkstücks erfolgt beispielsweise durch Berechnung, Vergleich mit in einer Datenbank gespeicherten Daten oder Kombination verschiedener Methoden.

Vorzugsweise umfasst die Messstrecke einen Kalibrierkörper, beispielsweise ein Schienensegment, das sich bei in die Messstrecke eingebrachtem Werkstück unterhalb des Werkstücks befinden kann. Der Kalibrierkörper kann zum Einmessen und/oder zur Kalibrierung der Vorrichtung genutzt werden. Beispielsweise lässt sich der Kalibrierkörper zur Temperaturkompensation nutzen. Zu diesem Zweck wird der Kalibrierkörper, der einen bekannten Querschnitt aufweist und nach Möglichkeit aus einem temperaturunempfindlichen Material besteht, zu einem Zeitpunkt, wenn sich kein Werkstück in der Messstrecke befindet, vermessen. Abweichungen der Messwerte gegenüber den bekannten Parametern des Kalibrierkörpers können für die Kalibrierung der Messeinrichtungen herangezogen werden.

Die oben genannte Aufgabe wird ferner durch ein Verfahren zur Messung der Geradheit eines länglichen Werkstücks, vorzugsweise in einer Anlage der metallverarbeitenden Industrie, gelöst. Das Verfahren weist auf: Einbringen des Werkstücks in eine Messstrecke, so dass sich das Werkstück in der Messstrecke in einer Längsrichtung erstreckt; Detektieren mittels mehrerer Messeinrichtungen jeweils einer Entfernung bzw. eines Abstands zu zumindest einem Punkt der Oberfläche des in die Messtrecke eingebrachten Werkstücks, wodurch jeder Messeinrichtung zumindest ein Messpunkt zugeordnet ist, wobei die Messeinrichtungen vorzugsweise in der Längsrichtung entlang der Messstrecke angeordnet sind; Ermitteln eines Maßes für die Geradheit des Werkstücks aus den detektierten Abständen; und Verändern eines oder mehrerer Messpunkte, vorzugsweise von Positionen derselben und/oder der Messpunktdichte, entlang der Längsrichtung.

Die Merkmale, technischen Wirkungen, Vorteile sowie Ausführungsbeispiele, die in Bezug auf die Vorrichtung beschrieben wurden, gelten analog für das Verfahren. Gleichermaßen gelten die nachstehend benannten Wirkungen, Vorteile sowie Ausführungsbeispiele für die Vorrichtung, wobei die im Rahmen des Verfahrens benannten Ausführungsvarianten insbesondere den strukturellen Aufbau der Steuerung definieren.

Vorzugsweise befinden sich das Werkstück und/oder die Messeinrichtungen während der Detektion der Abstände zur Ermittlung der Geradheit des Werkstücks in Ruhe. Insbesondere werden gemäß einer bevorzugten Ausführungsvariante weder die Messeinrichtungen noch das Werkstück während des Messvorgangs bewegt. Das Werkstück wird während der Vermessung in diesem Fall nicht durch die Vorrichtung gefahren. Auf diese Weise kann die Genauigkeit der Messung auf maschinenbaulich einfache und zuverlässige Weise verbessert werden.

Ferner wird die Geradheitsmessung für eine weitere Verbesserung der Messgenauigkeit vorzugsweise erst dann durchgeführt, wenn das System aus Messeinrichtungen und Werkstück zur Ruhe gekommen ist, insbesondere keine Schwingungen ausführt. Der optimale Beginn der Messung kann aus der Veränderung der Messwerte ermittelt werden. In anderen Worten, nach dem Einbringen des Werkstücks in die Messstrecke und vor der Detektion der Abstände für die Ermittlung der Geradheit des Werkstücks wird gewartet, bis sich das System aus dem Werkstück und den entsprechenden Messeinrichtungen in Ruhe befindet. Für die Ermittlung der für die Geradheitsmessung hinreichenden Ruhe können gemessene Abstände einer oder mehrerer der Messeinrichtungen und/oder deren zeitliche Veränderungen herangezogen werden.

Vorzugsweise wird aus den oben genannten Gründen ein Laser-Entfernungsmesser verwendet, um die Entfernung bzw. den Abstand zu einer oder mehreren der Messeinrichtungen zu detektieren.

Vorzugsweise umfassen aus den oben genannten Gründen eine oder mehrere der Messeinrichtungen einen Lichtschnittsensor, wodurch pro entsprechendem Messpunkt ein Höhenprofil des Werkstücks entlang eines Querschnitts detektiert wird, wobei eine oder mehrere der mit einem Lichtschnittsensor ausgestatteten Messeinrichtungen vorzugsweise so ausgerichtet werden, dass der zu vermessende Querschnitt senkrecht auf der Längsrichtung des Werkstücks steht.

Vorzugsweise umfassen aus den oben genannten Gründen zumindest zwei Messeinrichtungen, die in Längsrichtung voneinander beabstandet sind, insbesondere die beiden endseitigen Messeinrichtungen, je einen Lichtschnittsensor, wobei die beiden Messeinrichtungen so ausgerichtet werden, dass sich der zu vermessende Querschnitt in der Längsrichtung des Werkstücks erstreckt. Die beiden Messeinrichtungen können für die Einmessung des Werkstücks und/oder für eine Längenmessung des Werkstücks genutzt werden.

Vorzugsweise wird aus der Ermittlung der Entfernungen der Sitz oder die Befestigung eines am Werkstück angeordneten Bauteils geprüft. So kann beispielsweise der korrekte Sitz bzw. die korrekte Befestigung einer Muffe, wie etwa einer Gewindemuffe, auf einem Rohr geprüft werden, oder es kann der korrekte Sitz eines Dorns auf einer Dornstange geprüft werden.

Vorzugsweise wird mittels der mehreren Messeinrichtungen eine Verdrehung des Werkstücks ermittelt. Dies ist insbesondere im Fall "unrunder" Werkstücke, wie beispielsweise Schienen, sinnvoll und mit dem hierin dargestellten Verfahren synergetisch möglich. Zu diesem Zweck können die Messeinrichtungen in einem Gerüst drehbar gelagert oder in einem drehbaren Gerüst eingebaut sein.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben erwähnten Merkmale umgesetzt werden, insofern sich die Merkmale nicht widersprechen. Die folgende Beschreibung der bevorzugten Ausführungsbeispiele erfolgt dabei unter Bezugnahme auf die begleitenden Zeichnungen.

### Kurze Beschreibung der Figuren

Die Figur 1 ist eine schematische Seitenansicht einer Vorrichtung zur Messung der Geradheit eines länglichen Werkstücks.
Die Figur 2 ist eine schematische Draufsicht auf die Vorrichtung gemäß dem Ausführungsbeispiel der Figur 1.
Die Figur 3 ist eine schematische Vorderansicht einer Vorrichtung zur Messung der Geradheit eines länglichen Werkstücks gemäß einem weiteren Ausführungsbeispiel.
Die Figur 4 zeigt die Anwendung einer Vorrichtung zur Messung der Geradheit eines länglichen Werkstücks für eine Temperaturkompensation.
Die Figuren 5a und 5b zeigen die Anwendung einer Vorrichtung zur Messung der Geradheit eines länglichen Werkstücks für eine Prüfung der Befestigung von Rohrmuffen.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholende Beschreibung dieser Elemente wird teilweise verzichtet, um Redundanz zu vermeiden.

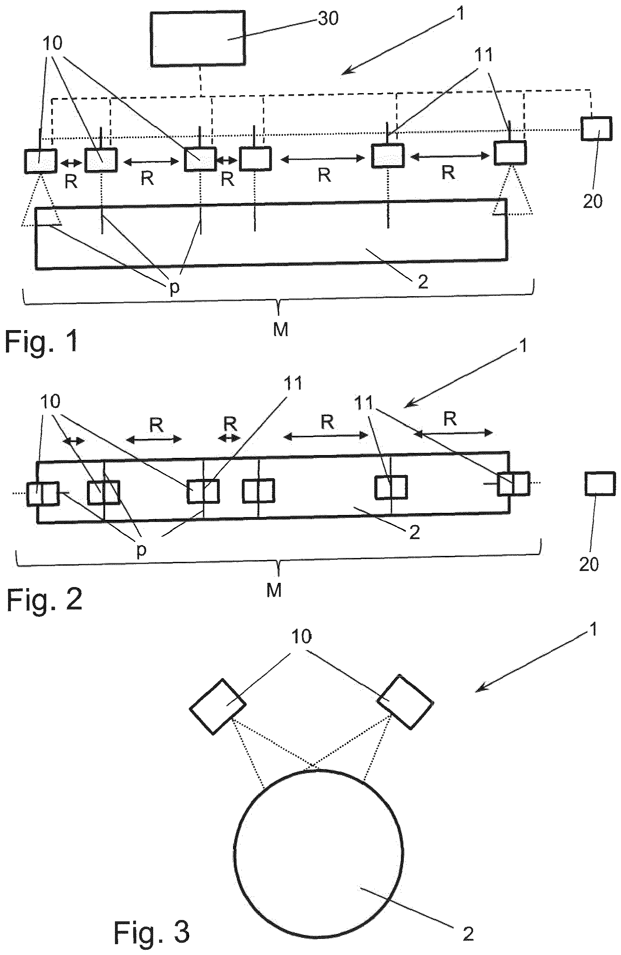

Die Figur 1 ist eine schematische Seitenansicht einer Vorrichtung 1 zur Messung der Geradheit eines länglichen, beispielsweise zylindrischen Werkstücks 2, das vorzugsweise aus Stahl oder einem Nichteisenmetall gefertigt ist. Das Werkstück 2 ist beispielsweise ein Innenwerkzeug, wie etwa eine Dornstange, ein Hohlblock, eine Luppe, ein Nahtlosrohr oder dergleichen.

Die Vorrichtung 1 findet in einer Anlage der metallverarbeitenden Industrie Anwendung, vorzugsweise zur Herstellung nahtloser Rohre wie beispielsweise in einem Schrägwalzwerk, Presslochwalzwerk, Pilgerwalzwerk, Stopfenwalzwerk, Kontiwalzwerk mit zwei, drei oder vier Walzen je Walzgerüst, Asselwalzwerk, Maßwalzwerk, Reduzierwalzwerke bzw. Streckreduzierwalzwerk.

Die Vorrichtung 1 weist mehrere Messeinrichtungen 10 auf, die jeweils eingerichtet sind, um einen Abstand oder ein Höhenprofil, d.h. mehrere Abstände oder eine quasi-kontinuierliche Anzahl von Abständen, berührungslos zu detektieren. Vorzugsweise sind die Messeinrichtungen 10 laserbasierte Lichtschnittsensoren oder umfassen solche, die jeweils ein Höhenprofil entlang einer projizierten Lichtlinie vermessen. Die Messung nutzt in diesem Fall eine Laserlinie p, die von einem Laser der Messeinrichtung 10 auf die Oberfläche des Werkstücks 2 projiziert wird. Ein lichtempfindlicher Detektor, beispielsweise eine Digitalkamera, detektiert die Laserlinie p. Durch Triangulation lässt sich aus dem detektierten Abbild der Laserlinie p der Abstand der Linie von der Messeinrichtung 10 oder das Profil entlang der Laserlinie p ermitteln.

Eine oder mehrere der Messeinrichtungen 10 sind entlang einer Verstellrichtung R verschiebbar bzw. verstellbar gelagert, wie es in der Figur 1 durch Doppelpfeile angedeutet ist. Die Verstellrichtung R verläuft vorzugsweise parallel zur Erstreckungsrichtung des Werkstücks 2, d.h. im Falle eines zylindrischen Werkstücks 2 parallel zur Zylinderachse desselben. Die Verschiebung bzw. Verstellung der Messeinrichtungen 10 erfolgt manuell oder automatisch mittels entsprechender Aktuatoren, die elektromotorisch, magnetisch, pneumatisch, hydraulisch oder anderweitig realisiert sein können.

In anderen Worten, eine oder mehrere Messeinrichtungen 10 betrachten das Werkstück 2 im Querschnitt an mehreren diskreten oder kontinuierlich einstellbaren Positionen. Über die ermittelten Abstände zwischen dem jeweiligen Messpunkt und zumindest einem definierten Punkt am Werkstück 2, beispielsweise Rohrmittelpunkt, kann die Geradheit des Werkstücks 2 direkt gemessen oder rechnerisch aus den Messwerten ermittelt werden, ohne das Werkstück 2 drehen, verschieben oder anderweitig bewegen zu müssen.

Ferner ist die Vorrichtung 1 vorzugsweise so eingerichtet, dass Messeinrichtungen 10 hinzugefügt und entfernt werden können, wodurch gemeinsam mit der Verstellbarkeit in der Verstellrichtung R eine hohe Skalierbarkeit der Vorrichtung 1 erreicht wird.

Die Anordnung der Messeinrichtungen 10 definiert eine Messstrecke M, in der das Werkstück 2 vermessen wird. Indem eine oder mehrere der Messeinrichtungen 10 verstellbar vorgesehen sind, hinzugefügt oder entfernt werden können, ist die Messstrecke M variabel. So kann die Vorrichtung 1 zur Vermessung langer und kurzer Werkstücke 2 verwendet werden, wobei bei gleichbleibender Anzahl an Messeinrichtungen 10 die Messpunktdichte im Fall kurzer Werkstücke 2 vergrößert werden kann, wodurch sich die Messgenauigkeit erhöht.

Vorzugsweise werden weder die Messeinrichtungen 10 noch das Werkstück 2 während des Messvorgangs bewegt, d.h. insbesondere wird das Werkstück 2 während der Vermessung nicht durch die Vorrichtung 1 gefahren. Ferner wird die Messung vorzugsweise erst dann durchgeführt, wenn das System aus den Messeinrichtungen 10 und dem Werkstück 2 zur Ruhe gekommen ist, insbesondere keine Schwingungen mehr ausführt. Der optimale Beginn der Messung kann aus der Veränderung der Messwerte ermittelt werden.

Die Ausrichtungen einer oder mehrerer der Messeinrichtungen 10 können unterschiedlich, insbesondere veränderbar vorgesehen sein, so dass die Laserlinie p flexibel projiziert werden kann. Vorzugsweise projizieren die beiden endseitig angeordneten Messeinrichtungen 10 eine Laserlinie p parallel zur Verstellrichtung R bzw. Erstreckungsrichtung des Werkstücks 2, wodurch die Enden des länglichen Werkstücks 2 detektierbar sind, ohne dass das Werkstück 2 präzise in der Messstrecke M positioniert werden muss oder die Messstrecke M während des Messvorgangs durchfährt. Die horizontale Position des Werkstücks 2 ist somit innerhalb eines definierten Bereichs variabel. Zudem ist auf diese Weise ohne weiteren maschinenbaulichen Aufwand eine Längenmessung des Werkstücks 2 möglich.

Die Positionen und Ausrichtungen der Messeinrichtungen 10 können prinzipiell manuell ermittelt werden, beispielsweise indem die Montagestruktur der Messeinrichtungen 10 eine entsprechende Skala aufweist, über welche die Positionen und/oder Ausrichtungen ablesbar sind. Vorzugsweise umfasst die Vorrichtung 1 jedoch einen Messeinrichtungsdetektor 20, der eingerichtet ist, um die Positionen und/oder Ausrichtungen einer oder mehrerer der Messeinrichtungen 10 zu detektieren. Zu diesem Zweck können die entsprechenden Messeinrichtungen 10 ein Positionselement 11, etwa eine herausklappbare Positionsflagge, aufweisen, das als Referenzpunkt zur Positions- bzw. Entfernungsmessung dient. Der Messeinrichtungsdetektor 20 ist vorzugsweise ein Laser-Entfernungsmesser oder umfasst einen solchen.

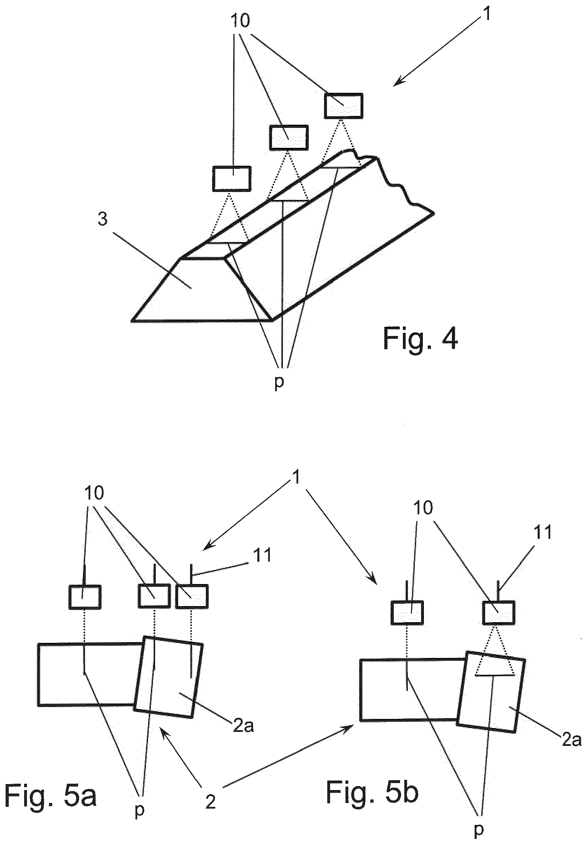

Die Verstellbarkeit der Messeinrichtungen 10 sowie die modulare Bauweise, durch welche die Messeinrichtungen 10 je nach Bedarf hinzugefügt oder entfernt werden können, ermöglicht eine schnelle und automatisierbare Anpassung der Messpunkte, Skalierung und Kalibrierung der Vorrichtung 1 in Bezug auf das zu vermessende Werkstück 2. Die Messgenauigkeit kann den jeweiligen Erfordernissen angepasst werden. Die Messpunktdichte ist variabel und kann so beispielsweise in Regionen hoher Beanspruchung oder Defektwahrscheinlichkeit konzentriert werden. Der Messeinrichtungsdetektor 20 kann hierbei zur Kalibrierung der Messeinrichtungen 10 genutzt werden. Die Positionen und gegebenenfalls Ausrichtungen der Messeinrichtungen 10 können mithilfe eines Kalibrierkörpers 3 (vgl. Figur 4) bekannter Geometrie und Maße eingemessen werden.

Um den Messvorgang und/oder die Kalibrierung der Vorrichtung 1 teilweise oder vollständig zu automatisieren, umfasst die Vorrichtung 1 eine Steuerung 30, die mit den Messeinrichtungen 10 sowie dem Messeinrichtungsdetektor 20 in Kommunikation steht und eingerichtet ist, um Messdaten derselben zu empfangen und vorzugsweise Signale zur Ansteuerung, beispielsweise zur Positionsänderung, zur Regelung des Messablaufs usw., zu senden. Die Steuerung 30 kommuniziert drahtlos oder drahtgebunden mit den entsprechenden Komponenten und kann eine programmierbare, rechnergestützte Einrichtung sein. Die Steuerung kann als zentrale oder dezentrale Recheneinheit implementiert sein, sie kann autark arbeiten oder Teil einer Prozesssteuerung sein, auf cloudbasierte und/oder internetbasierte Anwendungen zurückgreifen usw..

Die Figur 2 zeigt die Vorrichtung 1 der Figur 1 in einer Draufsicht. Die Steuerung 30 ist wie auch in den Ausführungsbeispielen der Figuren 3, 4, 5a und 5b der Übersichtlichkeit halber nicht nochmals eingezeichnet, sie ist jedoch Bestandteil der Vorrichtung 1.

Die Figur 3 ist eine schematische Vorderansicht einer Vorrichtung 1 zur Messung der Geradheit eines länglichen Werkstücks gemäß einem weiteren Ausführungsbeispiel, um zu zeigen, dass mehrere, beispielsweise zwei, Messeinrichtungen 10 an einer Messstation, d.h. an einer entsprechenden Schnittebene des Werkstücks 2 senkrecht zur Längserstreckung, vorgesehen sein können. Auf diese Weise lässt sich der Messbereich erweitern. Zudem ist aus der Figur 3 ersichtlich, dass die Messeinrichtungen 10 sich nicht exakt oberhalb des Werkstücks 2 befinden müssen, sondern außerhalb der Senkrechten angeordnet sein können.

Je nach Komplexität des Querschnitts des zu vermessenden Werkstücks 2 kann die Anzahl der Messeinrichtungen 10 je Messstation vielseitig variiert werden. So können für Werkstücke 2 mit rundem Querschnitt ein oder zwei Messeinrichtungen 10 ausreichend sein, während für Werkstücke 2 mit komplexerem oder größerem Querschnitt die Anzahl der Messeinrichtungen 10 größer ausfallen kann, beispielsweise vier bis acht.

Im Fall mehrerer Messeinrichtungen 10 je Messstation können diese insbesondere bei runden oder geometrisch wenig komplexen Werkstücken 2 vorteilhaft genutzt werden, um mehrere Werkstücke 2 parallel/gleichzeitig zu vermessen, wodurch der Durchsatz mit unveränderter Anzahl an Messeinrichtungen 10 erhöht werden kann.

Die Figur 4 zeigt die Anwendung der Vorrichtung 1 für eine Temperaturkompensation. Zu diesem Zweck wird ein Kalibrierkörper 3 mit bekanntem Querschnitt und nach Möglichkeit aus einem temperaturunempfindlichen Material vermessen. Der Kalibrierkörper 3 kann beispielsweise ein trapezförmiges Schienensegment sein, wie in Figur 4 gezeigt, das sich bei in die Messstrecke M eingebrachtem Werkstück 2 unterhalb des Werkstücks 2 befindet und zu einem Zeitpunkt, wenn sich kein Werkstück 2 in der Messstrecke M befindet, vermessen wird.

Die Figuren 5a und 5b zeigen die Anwendung der Vorrichtung 1 für eine Prüfung, ob Rohr- bzw. Gewindemuffen 2a korrekt befestigt bzw. aufgeschraubt sind. Insbesondere kann die Position und/oder Ausrichtung der Gewindemuffe 2a relativ zum verbleibenden Werkstück 2, das in diesem Fall vorzugsweise in Rohr ist, vermessen werden. Gleichermaßen kann im Fall einer Dornstange als Werkstück 2 die Position und/oder Ausrichtung einer etwaigen Dornstangenspitze vermessen werden.

Die hierin beschriebene Vorrichtung 1 ist besonders für die Geradheitsmessung von Dornstangen geeignet. Wenn die Dornstange sich in einem Walzwerk in Umlauf befindet, erlauben die von der Vorrichtung 1 erfassten Daten unmittelbar Rückschlüsse auf die Qualität der mittels der Dornstange hergestellten Rohre. Dornstangen, deren Qualität, insbesondere Geradheit, sich außerhalb einer vorgegebenen Toleranz befindet, können ausgeschleust werden, bevor Ausschuss produziert wird. Gegebenenfalls kann der Walzprozesses durch die Kenntnis der Dornstangengeometrie nachgesteuert werden. Die Vorrichtung 1 ist somit in der Lage, wichtige Werkzeugkennwerte zu liefern. Am fertigen Rohrprodukt kann die Geradheitsmessung der Verbesserung der Qualität und der Weiterverarbeitbarkeit dienen.

Die Vorrichtung 1 ist neben der Geradheitsmessung von Dornstangen und Rohren auch zur berührungslosen Geradheits- und/oder Längenmessung anderer Werkstücke 2 anwendbar, beispielsweise zur Vermessung von Stäben, Profilen, schweren und leichten Trägern, Schienen, tiefgezogenen Bauteilen wie etwa Blechprofilen, Schweißkonstruktionen und Baugruppen beispielsweise in der Automobilfertigung, für den Kranbau, bei der Fertigung von Strommasten und bei anderen vorgefertigten Komponenten mit definiertem Querschnitt über die Länge. Die Vorrichtung 1 als Messplatz kann in der Produktion oder wie im Fall von Dornstangen im Umlaufbetrieb innerhalb des Walzwerks angeordnet sein.

Im Fall unrunder Werkstücke kann die Vorrichtung 1 ferner zur Verdrehmessung angewendet werden. Zu diesem Zweck können die Messeinrichtungen 10 in einem Gerüst drehbar gelagert oder in einem drehbaren Gerüst eingebaut sein.

Die Vorrichtung 1 trägt zur Verbesserung der Ausbringung und Qualität von Langprodukten, wie den vorstehend genannten, bei. Die Messpunkte sind automatisch durch die Steuerung 30 und die Messeinrichtungen 10 aufnehmbar, deren Skalierung und Kalibrierung zudem einfach durchführbar sind.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zur Messung der Geradheit eines länglichen Werkstücks
- 2: Werkstück
- 2a: Gewindemuffe
- 3: Kalibrierkörper
- 10: Messeinrichtung
- 11: Positionselement
- 20: Messeinrichtungsdetektor
- 30: Steuerung

- p: Projizierte Laserlinie
- R: Verstellrichtung
- M: Messstrecke

## Patentansprüche

1. Vorrichtung (1) zur Messung der Geradheit eines länglichen Werkstücks (2), vorzugsweise in einer Anlage der metallverarbeitenden Industrie, wobei die Vorrichtung (1) aufweist:
eine Messstrecke (M), in die das Werkstück (2) einbringbar ist und sich in einer Längsrichtung erstreckt;
mehrere Messeinrichtungen (10), vorzugsweise in der Längsrichtung entlang der Messstrecke (M) angeordnet, die jeweils eingerichtet sind, um eine Entfernung zu zumindest einem Punkt der Oberfläche des in die Messtrecke (M) eingebrachten Werkstücks (2) zu detektieren, wodurch jeder Messeinrichtung (10) zumindest ein Messpunkt zugeordnet ist;
**dadurch gekennzeichnet, dass**
einer oder mehrere der Messpunkte, vorzugsweise die Positionen derselben und/oder die Messpunktdichte, entlang der Längsrichtung veränderbar sind.

2. Vorrichtung (1) nach Anspruch 1, **dadurch gekennzeichnet, dass** die Messpunktdichte entlang der Längsrichtung dadurch veränderbar ist, dass eine oder mehrere der Messeinrichtungen (10) in der Längsrichtung verstellbar und/oder eine oder mehrere der Messeinrichtungen (10) der Messstrecke (M) hinzufügbar und/oder eine oder mehrere der Messeinrichtungen (10) aus der Messstrecke (M) entfernbar sind.

3. Vorrichtung (1) nach Anspruch 1 oder 2, **dadurch gekennzeichnet, dass** diese ferner zumindest einen Messeinrichtungsdetektor (20), vorzugsweise einen Laser-Entfernungsmesser, aufweist, der eingerichtet ist, um die Entfernung zu einer oder mehreren der Messeinrichtungen (10) zu detektieren.

4. Vorrichtung (1) nach Anspruch 3, **dadurch gekennzeichnet, dass** die vom Messeinrichtungsdetektor (20) vermessbaren Messeinrichtungen (10) jeweils ein Positionselement (11), vorzugsweise eine herausklappbare Positionsflagge, aufweisen, die als Referenzpunkte zur Entfernungsmessung dienen

5. Vorrichtung (1) nach einem der vorigen Ansprüche, **dadurch gekennzeichnet, dass** eine oder mehrere der Messeinrichtungen (10) einen Lichtschnittsensor umfassen, wodurch pro entsprechendem Messpunkt ein Höhenprofil des Werkstücks (2) entlang eines Querschnitts detektierbar ist, wobei eine oder mehrere der mit einem Lichtschnittsensor ausgestatteten Messeinrichtungen (10) vorzugsweise so ausgerichtet sind, dass der zu vermessende Querschnitt senkrecht auf der Längsrichtung des Werkstücks (2) steht.

6. Vorrichtung (1) nach Anspruch 5, **dadurch gekennzeichnet, dass** zumindest zwei Messeinrichtungen (10), die in Längsrichtung voneinander beabstandet sind, vorzugsweise die beiden endseitigen Messeinrichtungen (10), je einen Lichtschnittsensor umfassen, wobei die beiden Messeinrichtungen (10) so ausgerichtet sind, dass sich der zu vermessende Querschnitt in der Längsrichtung des Werkstücks (2) erstreckt.

7. Vorrichtung (1) nach einem der vorigen Ansprüche, **dadurch gekennzeichnet, dass** ein oder mehrere Messpunkt jeweils durch mehrere Messeinrichtungen (10) vermessbar sind, wobei die entsprechenden Messeinrichtungen (10) vorzugsweise an der gleichen Position in Längsrichtung des Werkstücks (2) und in der Schnittebene dieser Position um das Werkstück (2) herum angeordnet sind.

8. Vorrichtung (1) nach einem der vorigen Ansprüche, **dadurch gekennzeichnet, dass** diese ferner eine Steuerung (30) aufweist, die mit den Messeinrichtungen (10) sowie dem etwaigen Messeinrichtungsdetektor (20) drahtlos oder drahtgebunden in Kommunikation steht und eingerichtet ist, um Messdaten derselben zu empfangen und vorzugsweise Signale zur Ansteuerung zu senden, wobei die Steuerung (30) ferner eingerichtet ist, um aus den empfangenen Messdaten ein Maß für die Geradheit des Werkstücks (2) zu ermitteln.

9. Vorrichtung (1) nach einem der vorigen Ansprüche, **dadurch gekennzeichnet, dass** die Messstrecke (M) einen Kalibrierkörper (3) vorzugsweise ein Schienensegment, umfasst, der sich bei in die Messstrecke (M) eingebrachtem Werkstück (2) vorzugsweise unterhalb des Werkstücks (2) befindet.

10. Verfahren zur Messung der Geradheit eines länglichen Werkstücks (2), vorzugsweise in einer Anlage der metallverarbeitenden Industrie, wobei das Verfahren aufweist:
Einbringen des Werkstücks (2) in eine Messstrecke (M), so dass sich das Werkstück (2) in der Messstrecke (M) in einer Längsrichtung erstreckt;
Detektieren mittels mehrerer Messeinrichtungen (10) jeweils einer Entfernung zu zumindest einem Punkt der Oberfläche des in die Messtrecke (M) eingebrachten Werkstücks (2), wodurch jeder Messeinrichtung (10) zumindest ein Messpunkt zugeordnet ist, wobei die Messeinrichtungen (10) vorzugsweise in der Längsrichtung entlang der Messstrecke (M) angeordnet sind;
Ermitteln eines Maßes für die Geradheit des Werkstücks (2) aus den detektierten Entfernungen; und
Verändern eines oder mehrerer Messpunkt, vorzugsweise von Positionen derselben und/oder der Messpunktdichte, entlang der Längsrichtung.

11. Verfahren nach Anspruch 10, **dadurch gekennzeichnet, dass** das Verfahren mittels einer Vorrichtung nach einem der Ansprüche 1 bis 9 durchgeführt wird.

12. Verfahren nach Anspruch 10 oder 11, **dadurch gekennzeichnet, dass** sich das Werkstück (2) und/oder die Messeinrichtungen (10) während der Detektion der Entfernungen zur Ermittlung der Geradheit des Werkstücks (2) relativ zueinander in Ruhe befinden.

13. Verfahren nach Anspruch 12, **dadurch gekennzeichnet, dass** vor der Detektion der Entfernungen für die Ermittlung der Geradheit des Werkstücks (2) abgewartet wird, bis sich das System aus dem Werkstück (2) und den entsprechenden Messeinrichtungen (10) in Ruhe befindet, wobei zur Ermittlung der Ruhe vorzugsweise gemessene Entfernungen einer oder mehrerer der Messeinrichtungen (10) herangezogen werden.

14. Verfahren nach einem der Ansprüche 10 bis 13, **dadurch gekennzeichnet, dass** das Werkstück (2) ein Innenwerkzeug, vorzugsweise eine Dornstange, ein Rohr oder eine Schiene ist.

15. Verfahren nach einem der Ansprüche 10 bis 14, **dadurch gekennzeichnet, dass** ein Laser-Entfernungsmesser verwendet wird, um die Entfernung zu einer oder mehreren der Messeinrichtungen (10) zu detektieren.

16. Verfahren nach einem der Ansprüche 10 bis 15, **dadurch gekennzeichnet, dass** eine oder mehrere der Messeinrichtungen (10) einen Lichtschnittsensor umfassen, wodurch pro entsprechendem Messpunkt ein Höhenprofil des Werkstücks (2) entlang eines Querschnitts detektiert wird, wobei eine oder mehrere der mit einem Lichtschnittsensor ausgestatteten Messeinrichtungen (10) vorzugsweise so ausgerichtet werden, dass der zu vermessende Querschnitt senkrecht auf der Längsrichtung des Werkstücks (2) steht.

17. Verfahren nach Anspruch 16, **dadurch gekennzeichnet, dass** zumindest zwei Messeinrichtungen (10), die in Längsrichtung voneinander beabstandet sind, vorzugsweise die beiden endseitigen Messeinrichtungen (10), je einen Lichtschnittsensor umfassen, wobei die beiden Messeinrichtungen (10) so ausgerichtet werden, dass sich der zu vermessende Querschnitt in der Längsrichtung des Werkstücks (2) erstreckt, und für eine Einmessung des Werkstücks (2) in der Messstrecke (M) und/oder zur Längenmessung des Werkstücks (2) genutzt werden.

18. Verfahren nach einem der Ansprüche 10 bis 17, **dadurch gekennzeichnet, dass** aus der Ermittlung der Entfernungen der Sitz oder die Befestigung eines am Werkstück (2) angeordneten Bauteils geprüft wird, wobei vorzugsweise das Werkstück (2) ein Rohr ist und der Sitz einer Muffe (2a) auf dem Rohr geprüft wird oder oder das Werkstück (2) eine Dornstange ist und der Sitz eines Dorns auf der Dornstange geprüft wird.

19. Verfahren nach einem der Ansprüche 10 bis 18, **dadurch gekennzeichnet, dass** mittels der mehreren Messeinrichtungen (10) eine Verdrehung des Werkstücks (2) ermittelt wird, wobei vorzugsweise dazu die Messeinrichtungen (10) in einem Gerüst drehbar gelagert oder in einem drehbaren Gerüst eingebaut sind.
